# EUROPEAN PATENT APPLICATION

(11) **EP 0 591 657 A1**
(43) Date of publication of application: **13.04.1994**
(21) Application number: 93113140.3
(22) Date of filing: 17.08.1993
(51) Int. Cl.: G06F 13/40

(54) **A common adapter card which is pluggable into computers having different bus architectures**

(30) Priority: 30.09.1992 US 954086
(71) Applicant: International Business Machines Corporation, Armonk, N.Y. 10504 (US)
(72) Inventor: Balasubramanian, Peruvemba Swaminatha, Chappaqua, New York 10514 (US); Lee, Nathan Junsup, New City, New York 10956 (US)
(74) Representative: Teufel, Fritz, Dipl.-Phys.

(57) **Abstract**

A pluggable common adapter card that may be utilized in at least two different computer systems that have different bus architectures such as an ISA computer system and a MCA computer system. The adapter card has a first edge connector on one side that is directly pluggable into an expansion slot of a first computer system and a second edge connector on the opposite side that is directly pluggable into an expansion slot of a second computer system. Signal translation logic is included for converting certain logic signals of one computer to logic signals of the other computer system. If external connections to the adapter card are required, an attachment card is mounted in each computer system, and the adapter card includes an external edge connector on one end thereof which is pluggable into the attachment card. The attachment card is designed to plug into the adapter card in an upright position in the one computer system, and to plug into the adapter card in an upside down position in the other computer systems, by duplicating the signals of one side of the edge connector on the connector on the attachment card with the signals on the other side of the edge connector in reverse order.

## Description

This invention is in the field of computing systems, and in particular is directed to adapter cards for such systems. Specifically, the invention is directed to a common adapter card that can be directly plugged into the expansion slots of at least two different computer systems that have different bus architectures.

Generally in computer systems and especially in personal computer systems, data is transferred between various elements such as a central processing unit (CPU), input/output (I/O) adapters. I/O devices, bus controllers (i.e., elements which can control the computer system such as bus masters or direct memory access (DMA) controllers and slaves), bus slaves (i.e., elements which are controlled by bus controllers) as well as memory devices such as the system memory. These elements are often interconnected via a system bus which is part of a system architecture. The architecture is designed for the movement of data, address and command information with or between these elements. In personal computer systems, there are a number of different architectures and system bus widths. This has required making separate adapter cards for the same function for different architectures. For example, a first graphics adapter card has to be designed for one architecture and a second graphics adapter card has to be designed for another architecture.

Making separate adapter (expansion) cards for different systems results in increased costs with respect to both manufacturing and maintenance. For example, the existing Industry Standard Architecture (ISA) adapter card or Micro Channel Architecture (MCA) adapter card can be plugged only into the expansion slots of the IBM PC/AT or PS/2 respectively. Micro Channel, PC/AT and PS/2 are each registered trademarks of the IBM Corporation. Making two separate cards, one for an ISA expansion slot and one for a MCA expansion slot not only is waste of resources but also requires excessive effort in supporting both. Maintaining them in separate inventories may present other problems.

U.S. Patent 4,991,085 to Pleva et al discloses an interface integrated chip which has command decode circuitry for receiving coded signals from the MCA bus and for generating decoded command signals for peripheral devices. Pin control circuitry controls multi-function pins and bus arbitration control circuitry is also provided POS (Programmable Option Select) register control circuit facilitates adapter identification support. Ready logic circuitry facilitates synchronous ready signal generation and circuitry to facilitate device error reporting is also provided. External data buffer control bus response signal generator and circuitry to support memory and I/O relocation are also included. The combination of functions is provided on a single integrated circuit thus efficiently utilizing the limited number of I/O pins available on the integrated circuit. The combination of functions is provided on a single integrated circuit thus efficiently utilizing the limited number of I/O pins available on the integrated circuit.

U.S. Patent 4,388,697 to Breen et al disclosed a full duplex, synchronous data set which includes primary signal processing circuitry which generates a modulated transmit data signal in response to serial data from a terminal interface. The moduclated data signal is transmitted over a primary channel of a transmit line. The primary signal processing circuitry also receives modulated data signals from a primary channel of a receive line and recovers therefrom a serial bit stream for presentation to the interface. The operating parameters of the primary signal processing circuitry are specified by a primary controller over a plurality of buses. The primary controller includes a microprocessor and associated peripherals. Encoder and decoder circuits within the primary signal processing circuitry are each comprised of a plurality of modules each designed to perform a specific function. The modules are operated in a selected sequence, with signals passing from one module to the next via a local bus.

U.S. Patent 5,043,877 to Berger et al discloses a system in which data is transferred between a computer system having a first architecture and a slave element having a second architecture. An adapter includes a connector corresponding to the first architecture, a second connector corresponding to the second architecture, and conversion circuitry located between the first and the second connector. The conversion circuitry converts signals corresponding to the first architecture to signals corresponding to the second architecture and signals corresponding to the second architecture to signals corresponding to the first architecture. In other words a conventional expansion card of one computer architecture can be used in a different computer architecture using this adapter. The conventional card of the one computer card is plugged into the adapter, and the adapter is plugged into the expansion slot of the other computer. That is, the expansion card is indirectly plugged into the expansion slot via the adapter.

According to the instant invention, a common adapter card is directly pluggable into the expansion slots of at least two different computers that have different bus architectures. This is achieved by making a common adapter card that is a small incremental change from a conventional card for one of the systems.

It is an object of the invention to provide a pluggable adapter card that may be utilizable in at least two different computer systems.

It is another object of the invention to provide a pluggable adapter card that may be utilized in both an ISA computer system and an MCA computer system.

It is yet another object of the invention to provide a pluggable adapter card that may be utilized in at least two different computer systems, and which has an edge connector on one side for the one computer system and an edge connector on the opposite side for the other computer system.

It is still another object of the invention to provide a pluggable adapter card that may be utilized in both an ISA computer system and an MCA computer system, and which has edge connectors on one side for the ISA computer system and an edge connector on the opposite side for the MCA system.

It is a further object of the invention to provide a pluggable adapter card that may be utilized in at least two different computer systems, and which has and edge connector on one side for the one computer system and an edge connector on the opposite side for the other computer system, and with an external edge connector on one end thereof for connection to an attachment card, with the adapter card being plugged into the attachment card in an upright position in the one computer system, and being plugged into the attachment card in an upside down position in the other computer system.

It is yet a further object of the invention to provide a pluggable adapter card that maybe utilized in both an ISA computer system and a MCA computer system, and which has edge connectors on one side for the ISA system and edge connectors on the opposite side for the MCA system, and with an external edge connector on one end thereof for connection to an attachment card, with the adapter card being plugged into the attachment card in an upright position in the ISA computer system, and being plugged into the attachment card in upside down position in the MCA system.

These objects are solved in general by the solution given in the independent claims.

Further embodiments of the present invention are laid down in the subclaims.

A pluggable common adapter card that may be utilized in at least two different computer systems that have different bus architectures, such as an ISA computer system and a MCA computer system. The adapter card has a first edge connector on one side that is directly pluggable into an expansion slot of one computer system and a second edge connector on the opposite side that is directly pluggable into an expansion slot of a different computer system. Signal translation logic is included for converting certain logic signals of one computer to logic signals of the other computer system. If external connections to the adapter card are required, an attachment card is mounted in each computer system, and the adapter card includes a third external edge connector on one end thereof which is pluggable into the attachment card. The attachment card is designed to plug into the adapter card in an upright position in the one computer system, and to plug into the adapter card in an upside down position in the other computer system, by duplicating the signals of one side of the edge connector on the attachment card with the signals on the other side of the edge connector in reverse order.
FIG. 1 is a diagram of an adapter card and an attachment card;
FIG. 2 is a block diagram of translation logic for converting signals of one computer system to signals of another computer system;
FIG. 3 is a first example of logic for generating the ISADECT signal of FIG. 2;
FIG. 4 is a second example of logic for generating the ISADECT signal of FIG. 2; and
FIG. 5 is a detailed diagram of side A of the attachment card for external connectors shown generally in Fig. 1;
Fig. 6 is a detailed diagram of side B of the attachment card for external connectors shown generally in Fig. 1;
Fig. 7 is a diagram illustrating pin numbers for signals on sides A and B of the attachment card for external connectors as shown generally in Figs. 5 and 6, respectively; and
Figs. 8A, 8B and 8C, when taken together as shown in Fig. 8, comprise a detailed block diagram of the signal translator logic which is shown generally in Fig. 2.

The invention is directed to how to make a common adapter card that can be used in at least two different computer systems, that have different bus architectures, such as an ISA system (IBM PC/AT) or a MCA system (IBM PS/2). It is to be appreciated that the invention is applicable to other computer architectures. For example, it may also be adapted to the Extended Industry Standard Architecture (EISA). This is accomplished by providing a common adapter card and that has a first edge connector on one side that is pluggable into an ISA expansion slot, and a second edge connector on the other side that is pluggable into a MCA expansion slot. The adapter card may be for different functions such as: a modem adapter, a memory adapter, a graphic adapter, an audio adapter, etc. Such a common adapter card for both systems results in decreased manufacturing and maintenance costs. The operation of an ISA interface is described in IBM Technical Reference, Personal Computer AT; ISA BUS SPECIFICATIONS AND APPLICATION NOTES, January 30, 1990, Copyright 1989, Intel Corporation; the TECHNICAL REFERENCE GUIDE, EXTENDED INDUSTRY STANDARD ARCHITECTURE EXPANSION BUS, Copyright COMPAQ COMPUTER Corp., 1989; and the PERSONAL COMPUTER BUS STANDARD P996 DRAFT D2.00, January 18, 1990, Copyright IEEE Inc. 1990. The operation of the PS/2 and the Micro Channel is described in "PS/2 Hardware Interface Technical Reference", IBM Publication order Number 68X-2330-0. The EISA is described in EISA specification, BCPR Services, Inc. (1989).

Providing edge connectors for both ISA signals and MCA signals isn't enough to make the common adapter card usable in both systems. One has to minimize the overhead driven from this extra feature. The card also has to be laid out properly so that it does not duplicate the logic nor external connectors such as D-shell connectors that have to be exposed to the users. In this invention, a simple, inexpensive and efficient way of designing a common adapter card that can be plugged into the expansion slots of both, ISA (PC/AT) and MCA (PS/2) systems is set forth.

The assumption is made that the common adapter card uses either an 8 bit or 16 bit data bus, (This is a reasonable assumption since the card has to have either 8 bit or 16 bit data width in order to be plugged into a PC/AT, an ISA system.) ISA signals and MCA signals are very similar in their roles. However, there are differences between two systems. Some of the differences are as follows:
1. The ISA bus does not have AUDIO signals while the MCA bus does.
2. The ISA has some latched address bus while all of the MCA address signals are unlatched.
3. The ISA has system clock while the MCA doesn't.
4. The ISA has decoded command signals while the MCA has raw Intel type command signals.
   (-IOW,-IOR,-MEMW,-MEMR,etc. vs-S0,-S1,M/-IO,-CMD,etc.)
5. The DMA scheme is different in the two systems.
6. The ISA has -5V while the MCA doesn't.
7. The MCA has automatic hardware configuration capability.

AUDIO signals are an example of signals that cannot be used for both ISA and MCA systems. Consequently, one more assumption has to be made that the adapter card only uses the signals that are available in both systems or that can be available after some signal translation. This is usually the case in most adapter cards.

Once an adapter card is determined that it is acceptable to be used in both systems, one has to layout the board so that it can actually be plugged into both systems and does not require two sets of external connectors. Since a set of external connectors should be placed on the side of edge connectors in order for them to be exposed to users through a bracket that will be mounted on the chassis of the computer, the edge connectors for both ISA and MCA should be placed on opposite sides of the card, directly across from one another, that is, placing the long side of the card horizontally, one edge connector should be placed on the upper side of the card and the other on the lower side of the card so that both connectors are near the same short side of the card. There won't be a clear definition of which side is a component side, anymore. This shouldn't be any problem since there is enough space in either system to have the components on either side. As a matter of fact, many adapter cards are now built with surface mount components on both sides of the card. If tall components such as Pin-Thru-Hole (PTH) are necessary, they can be placed on the attachment card for the external connector which is plugged into the slot facing the same direction in both ISA and MCA systems.

Since the dimension of a MCA adapter card is specified smaller than the dimension of ISA cards, one has to follow the MCA specification for the card dimension. It is important to include the ISA edge connector as a part of the total height of the card.

If an external connector is permanently mounted on one side of the card, the card won't fit into both systems. The reason is that the chassis of both system provides holes for the external connectors so that the external connector should be mounted on the conventional component side. In order to resolve this problem, in the event external connectors to the adapter card are required, a separate attachment card is provided that holds the external connectors. This attachment card has another edge connector that plugs into the the main adapter card and the edge connector has duplicated signals which are arranged so that they are vertically mirror imaged. In other words, the attachment card for the external connectors can be plugged into the main adapter card either upright or up-side-down.

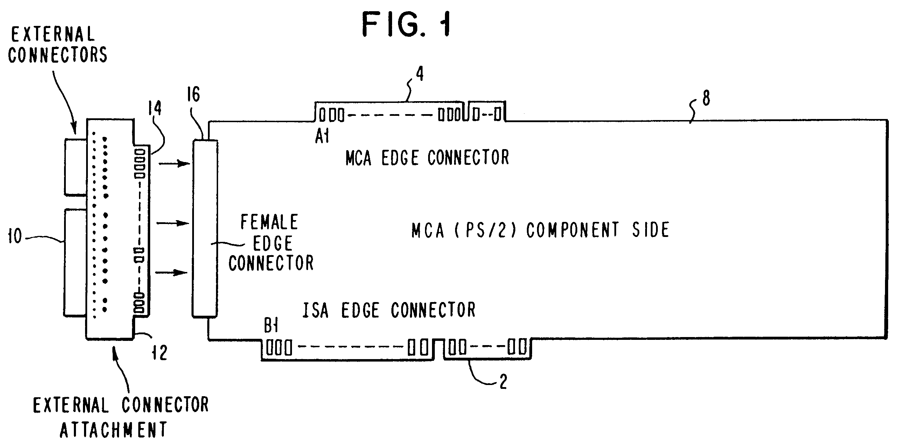

FIG. 1 shows how an ISA edge connector 2 and an MCA edge connector 4 are placed on opposite sides, such as the lower and upper sides, respectively, on an MCA (PS/2) sized board 8. The diagram also shows how an external connector 10 has been attached to a separate attachment card 12, having edge connectors 14 which plug into edge connectors 16 of the adapter card. This is explained in more detail below.

Another issue is how to detect whether the adapter card is plugged into a PC/AT (ISA) expansion slot or PS/2 (MCA) slot in order to activate the translation logic promptly so that all the signals are valid at the end of the system reset signal. This can be done in many different ways. A first method is to use a signal that is available only in one system such as SYSTEM CLOCK which is only available in an ISA system. One can detect the clock using a flip-flop. A second method is to use a signal that is available in both system but only used in one system. For instance, if the logic utilizes an OSC clock (14.3 MHz) for MCA logic only, one can use this signal to detect which system the card is plugged into. A third method is to use either power or ground signals by separating one of these from the rest. By picking one pin of these from only one system and separating this from the rest of the same kind, the pull up (if ground is used) or pull down (if 5 V is used) resistors can be used to define a default state if the power or ground is not connected to that particular pin or to define the other state if the pin is connected to the ground or power and pull the resistor into the reverse state to default state.

The last issue is the translation of the signals of one system to the other system. Since this technique is well developed in the industry and is being used in many products, it is discussed briefly below. However, how the signals from these two systems can be merged and used in the adapter card is a unique problem and is discussed below. In order to minimize the overhead, tristate drivers are used to merge the translated signals of one system with the raw signals from the other system. If a translation is not necessary, they can be connected together directly. The signal, i.e. ISADETECT; that detects which system the card is plugged into should be used to either activate the tristate driver or deactivate it.

Since the ISA type interface is more common in the industry, it is chosen to convert the MCA signals to ISA signals, and to use ISA signals as local signals in the adapter card. Consequently, the signals from MCA systems are translated into ISA signals whenever it is necessary. The Programmable Option Select (POS) registers in the MCA system are designed to be accessible in the ISA system as well as in the MCA system. At a Power-On-Reset time, the Card Enable is disabled and only POS registers are accessible in both system. Although the POS registers can be designed so that more than one card with POS registers can be plugged into an ISA system, this invention does not cover how the design is accomplished.

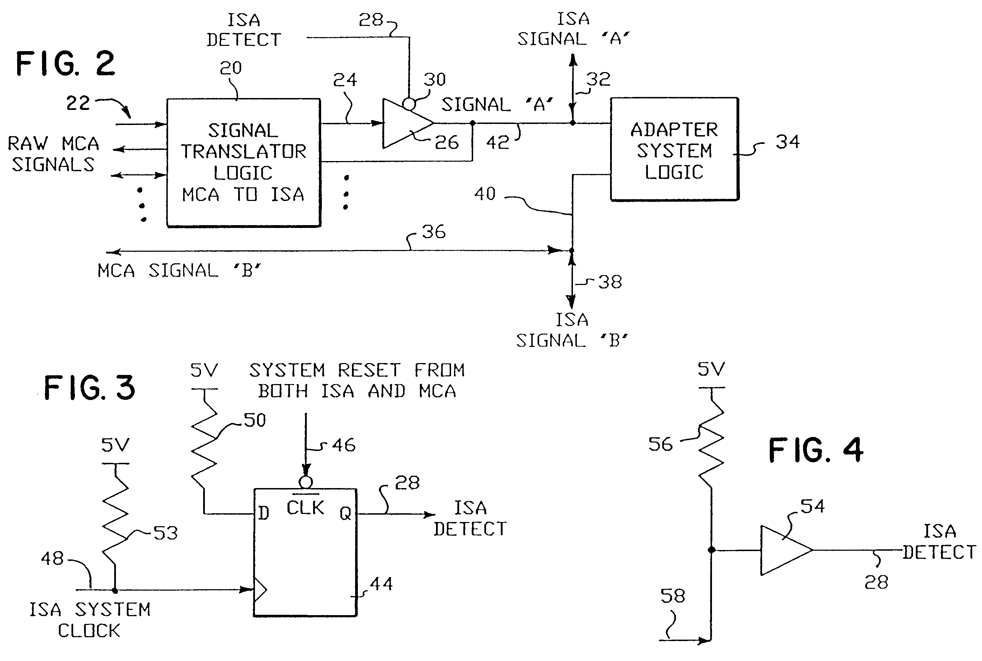

Refer to FIG. 2 which is a block diagram representation of signal translation logic for the adapter card. As was stated earlier, ISA signals are used as the local signals. A signal translator logic 20 is utilized to translate raw MCA signals on lines 22 into ISA signals on line 24 which are provided to the input of a tristate driver 26. The tristate driver 26 is controlled by an ISADETECT signal on line 28 which is provided to an inverting input 30 thereof. The ISADETECT signal on line 28 is high when this card is plugged into an ISA slot, and is inverted thus inhibiting the tristate driver 26, and ISA signals "A" on line 32 are utilized by the adapter system logic 34. These signals on line 32 could, for example, be latched addresses. MCA signals "B" on line 36 and ISA "B" signals on line 38 are commonly connected to line 40 for provision to and from logic 34. These "B" signals could, for example, be data. These "B" signals are signals that don't require translation.

When the ISADETECT signal is low, which is indicative of the card being plugged into a MCA slot, this is inverted at terminal 30, enabling tristate driver 26 to provide MCA signals converted to ISA logic levels on line 42 to the adapter system logic 34.

FIG. 3 illustrates one way of generating the ISADETECT signal from a logic signal. A flip-flop 44 has a logic signal such as a system reset on line 46 from both the ISA and MCA applied to an inverting input. A logic signal such as a system clock from an ISA edge connector is applied to a clock input on line 48 and this signal is pulled up to +5 volts via a pull up resistor 50. The D input of the flip-flop is connected to 5 volts via a pull up resistor 50. When the card is plugged into an ISA slot, the system clock is running and as soon as - system reset 46 goes HIGH, the ISADETECT signal 28 is set HIGH. On the other hand, when the card is plugged into a MCA slot, there is no system clock 40. Therefore, ISADETECT remains LOW even after-system reset 46 becomes HIGH.

FIG. 4 illustrates another way of generating the ISADETECT signal from a reference signal. A buffer 54 has its input connected to 5 volts through a resistor 56 and to a reference signal such as ground at a ground pin A03 of the MCA edge connector. Pin A03 of the MCA edge connector should not be connected to any other ground pins from either ISA or MCA. If the card is plugged into an ISA slot, there is no reference signal such as a ground connection at 58 and the 5 volts is passed by buffer 54 as a high signal on line 28. If the card is plugged into a MCA slot, there is a reference signal, the ground at 58 which results in a LOW signal on line 28, since the pin A03 of the MCA slot is connected to ground on the MCA systems.

As previously stated, the separate attachment card is designed so that it can be plugged in an upright position or upside down position by duplicating the signals of one side of the edge connector on the other side in reverse order. The attachment card 12 shown in FIG. 1 is mounted on the chassis of the computer using an appropriate bracket for each system.

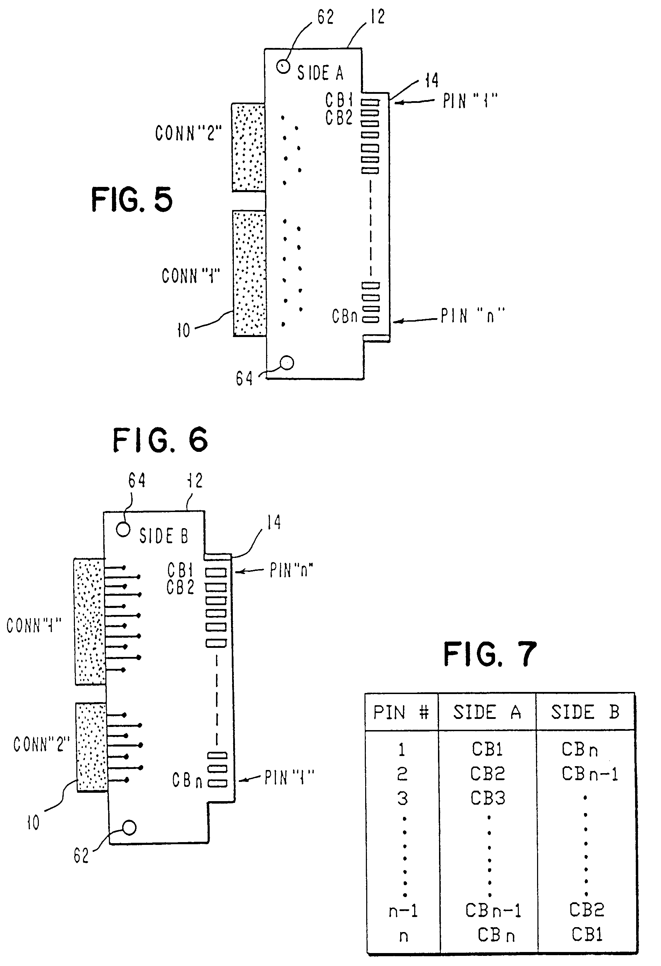

FIG. 5 illustrates the side A of attachment card 12. As stated above, card 12 is mounted to the chassis of the computer through mounting holes 62 and 64 by suitable attaching means such as bolts and nuts or the like. On side A, pins 1 through n are for signals CB1-CBn, respectively. This, for example, is when the attachment card 12 is plugged into an ISA system.

FIG. 6 illustrates the side B of attachment card 12. On side B, pins 1 through n are for signals CBn-CB1, respectively. This is the reverse order with respect to side A. This, for example, is when the attachment card 12 is plugged into a MCA system. This is shown more clearly in FIG. 7 where the pin numbers are shown with respect to the signals they represent on side A and side B.

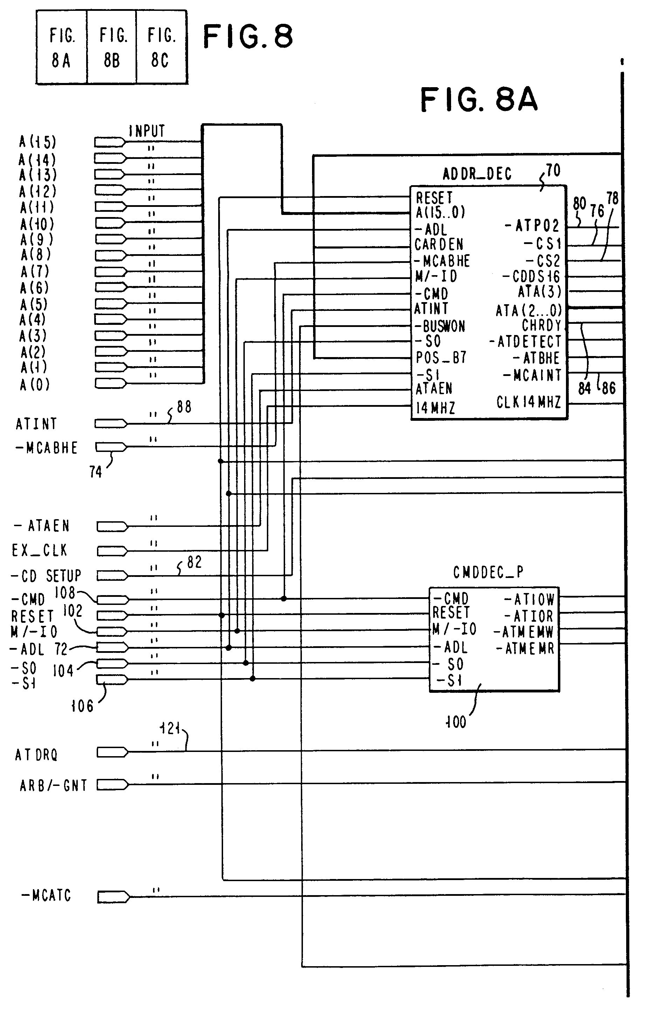

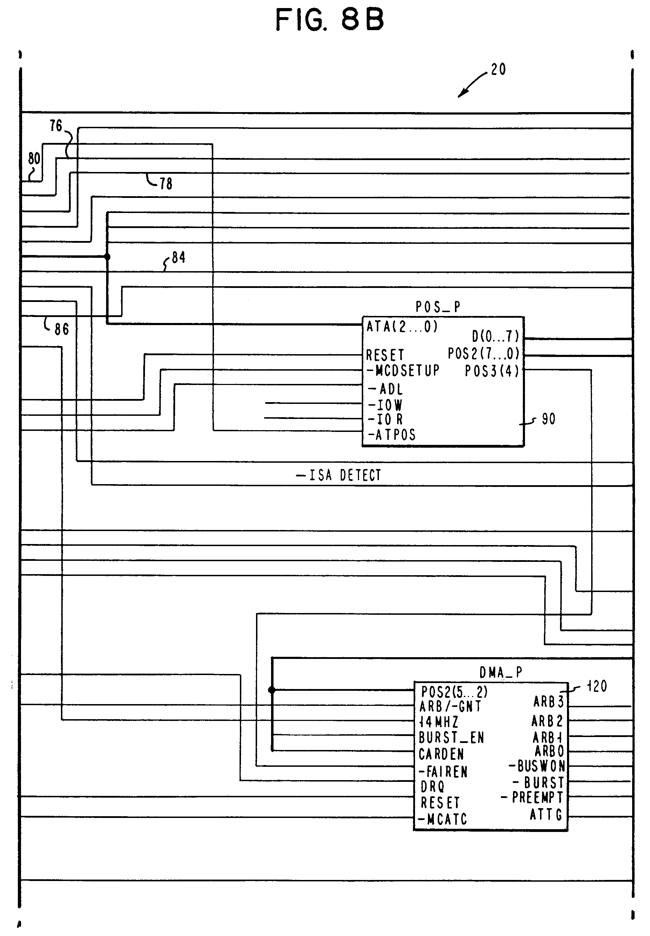

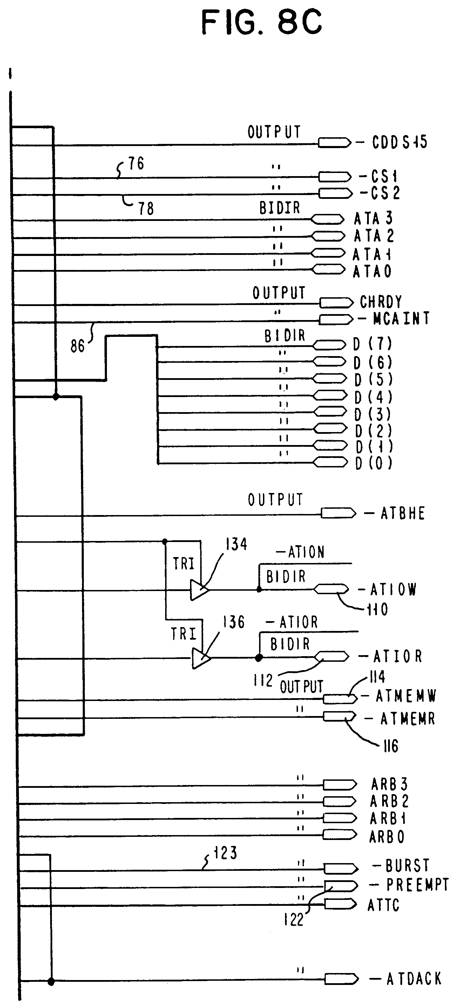

FIG. 8 is a detailed block diagram of the signal translator logic 20 (FIG. 2) that translates MCA signals to ISA signals. This particular implementation does not support bus mastering. In general, MCA signals are on the left side of the diagram, and ISA signals are on the right side of the diagram. A detailed description of these signals is described in the referenced technical manuals.

Signals that start with AT are ISA signals and signals that start with MCA are MCA signals. A [4]-A [15] are Address signals from both ISA and MCA and A [0]-A [3] are MCA addresses. Some of MCA signals are not prefixed with MCA since such signal name is available only on the MCA bus. A RESET signal is a system RESET signal from both systems. D [0]-D [1] are data bus signals to/from both systems. EX_CLK is a 14.3 Mhz oscillator signal from the MCA bus. CHRDY is a Channel Ready Signal from both systems.

An ADDR_DEC block 70 contains address latches that latches the unlatched MCA address bus with the falling edge of a -ADL signal on line 72. In this illustration, only four low significant order MCA address bits and a -SBHE (-MCABHE) signal on line 74 are latched and upper address bits are used to generate chip select signals. Block 70 decodes addresses for the address ranges the adapter card will use and generates chip selects (-CS1, -CS2, and -ATPOS) on lines 76, 78 and 80, respectively. Chip Select signals are latched using a transparent latch when -ADL is high. Block 70 takes addresses A [4]- A [15] from either the MCA bus or the ISA bus in order to avoid duplicated address decode logic. This block contains the ISADETECT logic that is illustrated in FIG. 3 or FIG. 4. ISADETECT is used to decide whether latched chip select signals with the high level of -ADL on line 72 will be used or unlatched chip select signals will be used as -CS1 on line 76 and -CS2 on line 78 as well as an enable line to the tristate drivers as explained earlier. The -ATPOS chip select signal on line 80 is used only when the adapter card is plugged into an ISA slot for POS (Programmable Option Selects) register accesses. Therefore, -ATPOS is not latched and activated only when ISADETECT is active. The accesses to POS registers from the MCA bus is accomplished through a normal card set up protocols using a -CDSETUP signal on line 82 as defined by the Micro Channel Architecture. Block 70 generates a CHRDY signal on line 84 for both the ISA and MCA bus, and also converts the MCA interrupt signal (-MCAINT) on line 86 to an ISA interrupt signal (ATINT) on line 88. Since block 70 is application specific, the low level logic is not shown.

A POS_P block 90 contains all the POS registers required by the Micro Channel Architecture. As mentioned earlier, the logic is designed so that the POS registers can be written or read by the ISA bus as well as MCA bus. The POS Register 0 and 1 contains the card identification number and the POS register 2 contains card enable signal (bit 0) and burst enable signal (bit 1) and DMA arbitration level (bit 2,3,4 and 5). The POS register 3 contains fairness enable signal (bit 4,-FAIREN) for the DMA channel arbitration. The logic is designed so that the POS register 0 and 1 are read only and the POS register 2 and 3 are read/write registers. At the System RESET, POS register 2 and 3 are set to their default states. For example, card enable is low, -FAIREN is low (meaning the fairness is enabled) and the arbitration level is set to a predefined priority level (application specific). The low level logics for this block is also omitted since it is application specific.

A CMDDEC_P block 100 decodes M/-IO on line 102, -S0 on line 104, -S1 on line 106, and CMD signals on line 108 of the MCA bus to generate ISA bus control signals such as -IOW (-ATIOW) on line 110, -IOR (-ATIOR) on line 112, -MEMW (-ATMEMW) on line 114, and -MEMR (-ATMEMR) on line 116. Although the logic can be designed so that it will generate ISA signals that meet timing requirements as specified in the IEEE Personal Computer Bus Standard P996, those four signals are generated so that it may run faster than ISA timing requirements since the adapter system logic can meet faster timing requirements in this implementation.

A DMA_P block 120 translates the ISA DRQ signal on line 121 to a MCA -PREEMPT signal on line 122 and a -BURST signal on line 123 if burst is enabled.

A pluggable adapter card has been described that may be utilized in at least two different computer systems such as an ISA system or an MCA system. The adapter card has an edge connector on one side for one computer system and another edge connector on the other side for the other computer system. If needed, an external edge connector is placed on one end of the card for connection to a separate attachment card. The adapter card is plugged into the attachment card in an upright position in the one computer system, and is plugged into the attachment card in an upside-down position in the other computer system.

## Claims

1. A pluggable adapter card that is pluggable into at least two different computer systems, that have different bus architecture, comprising:
said pluggable adapter card having a first edge connector on one side that is pluggable into an expansion slot in a first computer system, and a second edge connector on the opposite side that is pluggable into an expansion slot of a second computer system.

2. The combination claimed in claim 1, wherein said first computer system is an ISA computer system and said second computer system is a MCA computer system.

3. The combination claimed in claim 1 or 2, including:
translation logic for converting certain logic signals of the first computer system into logic signals compatible with said second computer system.

4. The combination claimed in claim 1, 2 or 3, including:
translation logic for converting certain logic signals of one of the ISA and MCA computer systems to logic signals compatible with the other computer system.

5. The combination claimed in claim 1, 2, 3 or 4, including:
an external edge connector on one end of said adapter card, for receiving external signals; and
an attachment card which is mountable in said first and second computer systems, including an edge connector which is pluggable to the external edge connector on said one end of said adapter card, with the pin configuration on opposite sides of said edge connector being configured in reverse order so said attachment card is plugged into said external edge connector of said adapter card in an upright position when said adapter card is plugged into said said first computer system, and is plugged into said external edge connector of said adapter card in an upside down position when said adapter card is plugged into said second computer system.

6. The combination claimed in claim 1, 2, 3, 4 or 5, including:
translation logic for converting certain logic signals of the first computer system into logic signals compatible with said second computer system.

7. A pluggable adapter card that is pluggable into expansion slots of both an ISA computer system and an MCA computer system, comprising:
said pluggable adapter card having a first edge connector on one side that is pluggable into an expansion slot of said ISA computer system and a second edge connector on the opposite side that is pluggable into an expansion slot of said MCA computer system; and
translation logic for converting certain logic signals of one of the ISA and MCA computer systems to logic signals that are compatible with the other computer system.

8. The combination claimed in claim 7 including:
an external edge connector on one end of said adapter card for receiving external signals; and
an external connections attachment card which is mountable in a fixed position in an ISA and MCA computer, including an edge connector which is pluggable to the external edge connector on said one end of said adapter card, with the pin configuration on opposite sides of said edge connector being configured in reverse order so said attachment card is plugged into said external edge connector of said adapter card in an upright position when said adapter card is plugged into one of said ISA and said MCA computer systems, and is plugged into said external edge connector of said adapter card in an upside down position when said adapter card is plugged into the other one of said ISA and MCA computer systems.

9. A pluggable adapter card that is pluggable into expansion slots of both an ISA computer system and an MCA computer system, comprising:
said pluggable adapter card having a first edge connector on one side that is pluggable into an expansion slot of said ISA computer system and a second edge connector on the opposite side that is pluggable into an expansion slot of said MCA computer system; and
translation logic for converting certain logic signals of the MCA computer system to ISA logic signals in response to sensing the absence of a predetermined signal from said first edge connector.

10. The combination claimed in claim 9, wherein said predetermined signal is a logic signal, especially an ISA system clock, or wherein said predetermined signal is a reference signal, especially a ground.
